# EUROPEAN PATENT APPLICATION

(11) **EP 4 806 599 A1**
(43) Date of publication of application: **16.09.2026**
(21) Application number: 26158028.6
(22) Date of filing: 12.02.2026
(51) Int. Cl.: B25J 9/16, G05B 19/42, G06T 7/30

(54) **COMPUTER-IMPLEMENTED METHOD**

(30) Priority: 12.03.2025 GB 202503630
(71) Applicant: Rolls-Royce plc, London N1 9FX (GB)
(72) Inventor: Evans, Benjamin, Derby, DE24 8BJ (GB); Keedwell, Max B, Derby, DE24 8BJ (GB); Lee, Wai Chung, Derby, DE24 8BJ (GB)
(74) Representative: Rolls-Royce plc

(57) **Abstract**

A computer-implemented method of configuring a robot is provided. The method comprises: receiving a first scan of a physical object from a first scanner, wherein the first scan includes a first 3D virtual representation of at least a portion of the physical object in a first coordinate system corresponding to a coordinate system of the robot; receiving a second scan of the physical object from a second scanner, wherein the second scan includes a second 3D virtual representation of at least a portion of the physical object in a second coordinate system; comparing the first and second 3D virtual representations to determine a coordinate transformation between the first and second coordinate systems; and using the transformation to align the first and second 3D virtual representations.

## Description

### FIELD

This disclosure relates to a computer-implemented method for configuring a robot and to a robot control module for configuring a robot.

### BACKGROUND

Robots are used to manufacture and repair components by moving one or more mechanical arms according to preprogrammed instructions. Some robots include tools for operating on the components by moving the tool along a preprogrammed toolpath. For example, welding robots may be used to weld components during manufacture and repair. However, programming such robots can be complex and require accurate models of the component being worked on.

Programming a robot toolpath is particularly complex for repairing damaged components where updated computer-aided design (CAD) models for worn or damaged components are unlikely to be available. This can impede the precision of robotic repairs, especially when parts have deviated from their original design due to wear or damage.

Traditional 3D scanning methods may be used create digital models of physical components for toolpath planning. However, such methods often fail to accurately align the digital models with the robot coordinate system which leads to inaccuracies in robot operations and to sub-quality repairs or welds.

Furthermore, even when accurate CAD models are available, the programming of robots typically involves offline programming using specialized software. Although this method provides precision for complex repairs, it necessitates significant setup, time, and programming expertise, often involving proprietary programming languages and controllers. This complexity can be a barrier for operators, such as manual welders, who require the flexibility to adjust weld parameters and robot movements for varied robot operations including unique repairs and component shapes. Additionally, the need to master different proprietary systems for each robot brand presents a steep learning curve, increasing the time and resources needed to implement robotic solutions in weld repair.

Alternatively, robot operators may use a robotic teach pendant to define a toolpath for robot operations (e.g., for robotic welding or other manual task) wherein a teach pendant device is used to manually control a robot arm to move in a desired pose, along a desired toolpath. However, this method is prone to inconsistencies due to human error and variability in manual settings.

### SUMMARY

Accordingly, in a first aspect there is provided a computer-implemented method of configuring a robot, the method comprising: receiving a first scan of a physical object from a first scanner, wherein the first scan includes a first 3D virtual representation of at least a portion of the physical object in a first coordinate system which corresponds to a coordinate system of the robot; receiving a second scan of the physical object from a second scanner, wherein the second scan includes a second 3D virtual representation of at least a portion of the physical object (that is within the first scan) in a second coordinate system which is independent to the coordinate system of the robot; comparing the first and second 3D virtual representations to determine a coordinate transformation between the first and second coordinate systems; and using the transformation to align the first and second 3D virtual representations.

By using the first scanner to align the 3D representation from the second scanner, a more accurate representation of the physical object can be obtained for configuring the robot. Further, by using the first scan to align the second scan, the second scan may be aligned with the robot coordinate system enabling toolpaths to be determined using information in the second scan. Beneficially, the coordinate transformation is determined without needing user inputs or manual alignment thus improving the precision of the alignment. As a result the overall precision and accuracy of the robot is improved for moving relative to and operating on the physical object.

The present method may be used to align scans from one or more additional scanners, which are not registered with the robot coordinate system. Accordingly, the robot operating system is more flexible and adaptable to different scanner types.

The robot may be a programmable machine which is configured to perform tasks according to a set of programming instructions. The robot may comprise a moving arm (e.g., an articulated arm, robotic arm, robotic manipulator, mechanical arm). The moving arm may be a mechanical device which can move in one or more selected from: linear or rotational directions relative to a stationary point according to the programming instructions.

The moving arm may be configured to move between programmed points in a coordinate system of the robot. For example, the robot coordinate system may be a coordinate space defined in the robot operating system (ROS) for positioning the moving arm. For example, the robot programming instructions may comprise cartesian (xyz) coordinates for directing and positioning the moving arm in the robot coordinate system. The moving arm may comprise a pointer or tool. The moving arm may be configured to move the tool to a coordinate in the programming instructions to automatically complete a task.

The robot may be for performing any manual task suitable for performing by a robot such as a physical repair or manufacturing task. For example, the robot may be a welding robot for completing robotic welding tasks. The welding robot may be a programmable machine that performs welding tasks. In other examples, the robot may be configured perform one or more other tasks such as: sanding, dressing, grinding, machining, peening and plasma spraying. The robot may comprise a stationary base, a moving arm, robot controller, and power source for a tool such as a welding power source. The moving arm may comprise a tool (e.g., a welding tool, a welding torch, or electrode). The moving arm may be configured to move the tool along a predefined path (e.g., a toolpath) operate on the object, for example, to weld pieces together. The toolpath may be determined according to methods discussed herein in order to ensure accurate performance of the task (e.g., an accurate weld).

The computer-implemented method may be for configuring the robot to repair a physical object (also known as a workpiece). Objects in need of repair due to breakage or wear may appear different to their original form. Accordingly, receiving and processing accurate scans of the object in need of repair can ensure that a more accurate and longer lasting repair is possible (e.g., using robotic welding).

The physical object may be any suitable workpiece for operating on by the robot such as a part or component for repairing. In some examples, the physical object may be an aerospace component. For example, the physical object may be part of an aircraft or aircraft engine (e.g., a gas turbine engine). The fidelity required for repairing such objects is strict and so it is beneficial to obtain and accurately align models of the part for repair in the aerospace field, prior to determining and programming a toolpath. The physical object may be referred to herein as a workpiece.

The first and second scanners may be any suitable device for capturing a digital model of the shape and (optionally) the appearance of an object to create a 3D virtual representation of that object. The 3D virtual representation may be a digital model which defines the shape of the object in a coordinate space. The 3D virtual representation may be displayed on a screen (e.g., rendered) or stored in memory. Each 3D virtual representation may be in any suitable digital form such as a point cloud or a mesh file.

Point cloud data may be understood to be a discrete set of data points in space. The points may represent a 3D shape or object. Each point has a set of Cartesian coordinates (X, Y, Z) defining a position of the point in coordinate space. Points may contain data other than position such as RGB colours, normals, timestamps, etc.

A mesh file (or mesh) may be understood to be a file format that represents a 3D object as a collection of vertices, edges, and faces. The mesh may be formed of polygons such as triangles.

The coordinate transformation may be understood to be one or more algorithms, instructions, or relationships for translating one coordinate system to another. The coordinated transformation may be in the form of a transformation matrix. A coordinate transformation matrix may be understood to be a matrix that changes the coordinates of a vector or 3D model from one coordinate system to another. The transformation matrix may include geometric operations such as translations, rotations, and scaling. Accordingly, the coordinate transformation may be understood to be mapping or translation information defining how the first virtual representation of the physical object can be aligned with the second virtual representation of the physical object in a common coordinate space.

Accordingly, the computer-implemented method may be considered to be method of registering a 3D representation of a physical object with a robot coordinate system. The registered 3D representation may then be used to operate a moving arm of the robot. Thus, the computer-implemented method may form part of a computer-implemented method of operating a robot.

The computer-implemented method may be performed by any suitable processing system or control module such as a processor, a computer, an operating system, or a server, etc. For example, the computer-implemented method may be performed by a robot control module which is in communication with one or more selected from: the first scanner, or the second scanner, or the robot. For example, the first and second scans may be received directly from the first and second scanners. **In** other examples, the first and second scans may be retrieved from memory or another interim storage between the scanners and the processor performing the method. In further examples, the robot control module may be located remotely from the scanners and the robot and the first and second scans may be received via a network or the cloud.

The computer-implemented method may further comprise using one or more selected from: the first or second scans and the coordinate transformation to determine a position of a moving arm of the robot relative to the physical object in the robot coordinate system. The moving arm may therefore be positioned relative to the physical object using one or more from: the first or second scans and the transformation.

The first scanner may be a robot-mounted scanner located on a moving arm of the robot. Accordingly, as the moving arm of the robot moves (in the robot coordinate system), a perspective of the first scanner may move with the moving arm. The first scanner may be communicatively coupled to a controller of the robot to receive position information of the robot moving arm. The first scanner may then determine a location of incoming scan data relative to the position the moving arm was in when the incoming scan data was received. Thus, the incoming scan data may be register in the coordinate system of the robot and used to construct the first 3D virtual representation of the physical object in the robot coordinate space.

The first coordinate system corresponding to the robot coordinate system may be understood to mean that the first coordinate system is aligned with the robot coordinate system. For example, the first 3D virtual representation may directly correspond a coordinate system of the robot. For example, a scale, orientation, and origin (e.g., (0,0,0) location of the first coordinate system and of the robot coordinate system may be the same or have a known correspondence. For example, the known correspondence may be an constant offset applied to the first scan, for example, to account for a position of the first scanner on the moving arm.

The second scanner may be a fixed scanner located independently to the moving arm of the robot. The second scanner may therefore be stationary relative to the moving arm and/or the physical object. The second scanner may have an independent coordinate system to the robot coordinate system. As such, the second coordinate system may be independent to (e.g., unaligned with) the coordinate system of the robot.

The first and second scanners may comprise different types of scanners configured to provide the first and second 3D virtual representations.

For example, the first scanner may be a 2D (two-dimensional) scanner configured to measure a plurality of distances between the second scanner and the physical object to provide 2D profile data for forming the first 3D virtual representation. The method may comprise acquiring the first scan of at least the portion of the physical object from the first scanner by moving the moving arm relative to the physical object to obtain the 2D profile data of the object.

For example, the 2D scanner may comprise a sensor mounted on the moving arm of the robot for detecting 2D profiles. The sensor may use laser triangulation to detect a distance from the sensor to the physical object. The first scanner may then create a 2D height profile or a 3D point cloud from the sensed distances. For robotic welding, the first scanner may be a 2D profile sensor mounted in front of a welding torch on the robot arm.

Receiving the first scan may comprise: sending position signals to the robot to move the moving arm (optionally on a predefined path) relative to the physical object, and receiving 2D profile data from the 2D scanner. The position of the moving arm in robot coordinate system when the profile data was captured may then be used to construct the first 3D virtual representation. Using a 2D profile scanner such as a laser scanner may provide more accurate surface measurements of the physical object than other types of scanner which may have a wider field of view but may not be as sensitive or accurate.

The second scanner may be any suitable scanner for constructing a 3D model of the physical object. For example, the second scanner may be an optical scanner comprising one or more cameras. By using a different type of scanner to the first scanner, a wider field of view of the object may be obtained more quickly. Thus the present method may enable a wide view of the physical object to be obtained using a fixed, independent scanner whilst acquiring more accurate, detailed information about (a potentially smaller region of interest of) the physical object from the robot-mounted scanner.

For example, the second scanner may include a stereo camera system comprising at least two optical sensors. For example, the second scanner may be a GOM scanner. As such, the second scanner may be configured to project fringe patterns onto the surface of the physical object and then use two cameras to record the projected patterns for creating the second 3D virtual representation.

The first scan may include a first 3D virtual representation of a first portion of the physical object and the second scan may include a second 3D virtual representation of a second portion of the physical object. The second portion may be larger than and overlap or include the first portion. For example, the first scan may include a region of interest in the second scan.

At least one of the first and second scans may be a point cloud scan, wherein the respective 3D virtual representation is formed of point cloud data. For example, the first 3D virtual representation (formed from 2D profile data) may include a point cloud. The method may comprise down-sampling the point cloud scan. For example, the point cloud scan may be down sampled before comparing and combining the first and second 3D virtual representations. Down-sampling the point cloud scan before one or more of the method steps discussed herein can reduce a processing time and resource requirements of the method. The original (full size) point cloud scan may be stored for displaying or for later processing whereas the down-sampled point cloud scan may be used for combining the first and second scans for configuring the robot.

At least one of the first and second scans may be a mesh file. For example, the second 3D virtual representation (formed from optical scanning data) may be formed as a mesh.

In this way, the first or second 3D virtual representation may comprise point cloud data and the other of the first and second 3D virtual representation may comprise mesh data. The method may then comprise a step of converting the point cloud data to mesh data, or converting the mesh data to point cloud data. The point cloud data may first by down-sampled to increase the speed and resource requirement of the conversion. This conversion may be performed before comparing the first and second 3D virtual representations.

Comparing the first and second 3D virtual representations may comprise minimising a distance between a first point cloud and a second point cloud to determine the transformation between point clouds. For example, comparing the first and second 3D virtual representations to determine the coordinate transformation may comprise using a geometric registration algorithm such as Iterative Closest Point (ICP) registration. Other suitable registration algorithms, such as point-to-plane or multi-way registration, may also be used.

The computer-implemented method may further comprise using the coordinate transformation to combine the first and second 3D virtual representations to provide an overall representation of the physical object. The overall representation may be aligned with the robot coordinate system (e.g., defined in the ROS coordinate space).

The method may further comprise displaying the overall representation of the physical object, e.g., on a display, in a graphical user interface (GUI), etc. Next, the method may comprise receiving a user input indicating a target area of the overall representation, and using the target area and the robot coordinate system to determine movement commands for controlling the moving arm of the robot. For example, the user input may be used to determine a toolpath for the robot in the target area according to the methods of further aspects discussed herein.

The method may further comprise using the first and second scans and the coordinate transformation to move the moving arm of the robot relative to the physical object. In some examples, the moving arm may comprise a tool (e.g., a welding torch) and the method may comprise using the first and second scans and the coordinate transformation to calculate a toolpath for the moving arm to operate on the physical object.

In some examples, the method may comprise receiving a plurality of first scans of (optionally overlapping) portions of the physical object from the first scanner and combining the plurality of first second scans to construct the first 3D virtual representation. Additionally, or alternatively, the method may comprise receiving a plurality of second scans of (optionally overlapping) portions of the physical object from the second scanner and combining the plurality of second scans to construct the second 3D virtual representation.

In some examples, the method may comprise performing an initial calibration process to determine the correspondence between the first coordinate system and the robot coordinate system. This may involve aligning a coordinate system of the first scanner with the robot coordinate system. For example, the initial calibration process may be performed to account for or determine a position of the first scanner on the moving arm.

The second scanner may be used to calibrate a position of the first scanner on the moving arm of the robot. That is, by comparing scans from the first and second scanner of a known, reference object (e.g., a fiducial marker, for example a part of a test bench) which is located in a known location of the robot coordinate system, then the first coordinate system of the first scanner may be aligned with the robot coordinate system to account for the position of the first scanner on the moving arm.

For example, the first scanner may be mounted on a moving arm of the robot, and the method may comprise: performing an initial calibration process to determine the correspondence between the first coordinate system and the robot coordinate system. The initial calibration process may comprise: receiving a reference scan from the second scanner of a reference object. The reference object may include a known shape or feature which is positioned at a known position in the robot coordinate system (e.g., at a known x,y,z position from the robot origin).

Next, the known feature of the reference object in the reference scan may be aligned (e.g., manually in software) with the known position of the feature in the robot coordinate system. That is, the x,y,z position of the reference object feature may be aligned to the coordinates of the known x,y,z position from the robot origin.

Next, the initial calibration process may comprise receiving an alignment scan (i.e., a first scan) of the reference object from the first scanner which is mounted on the robot arm. A physical offset of the first scanner on the robot may be considered to be zero from a tool centre point (X,Y,Z) of the robot origin. A location of the known feature of the reference object in the alignment scan and in the reference scan may then be compared, and the comparison used to align the first coordinate system with the coordinate system of the second scanner, and hence the coordinate system of the robot. In this way, a transformation matrix may be determined for aligning scans from the first scanner with the robot coordinate system. The transformation matrix may be used to determine the mounting position of the first scanner on the robot arm in the robot coordinate frame.

Once the first scanner position on the robot arm in determined using the initial calibration process, this position can be stored for later use (for example, by updating apposition of the first scanned in a control module of the robot).

Next, an additional scan of the reference object may be received from the first scanner on the robot arm. The additional scan can then be compared to the aligned reference scan from the second scanner to generate a final transformation matrix. The final transformation matrix may be used to automatically translate, in real time, future scans received from the first, robot-mounted, scanner so that the first scans can be automatically aligned to robot coordinate system.

Using the second scanner to calibrate the images from the first scanner with the robot movement may thus provide more accurate and convenient calibration compared to manual calibration methods which can be slow and burdensome to perform.

In a further aspect there is provided a computer-readable medium comprising instructions which when executed by a computer cause the computer to execute the method of the preceding aspect.

In a further aspect there is provided a robot controller (e.g., processing system, control module, etc) for configuring a robot according to the methods discussed herein. For example, there is provided a robot controller for configuring a robot comprising: a first scan input module configured to receive a first scan of a physical object from a first scanner, wherein the first scan includes a first 3D virtual representation of at least a portion of the physical object in a first coordinate system corresponding to a coordinate system of the robot, a second scan input module configured to receive a second scan of the physical object from a second scanner, wherein the second scan includes a second 3D virtual representation of at least a portion of the physical object in a second coordinate system, a model processing module configured to compare the first and second 3D virtual representations to determine a coordinate transformation between the first and second coordinate systems, and a robot control module configured to use the first and second scans and the coordinate transformation to position a moving arm of the robot relative to the physical object in the robot coordinate system.

In a further aspect there is provided a robotic operating system comprising: a robot comprising a moving arm, a first scanner configured take a first scan of a physical object, a second scanner configured take a second scan of the physical object, and robot control module communicatively coupled to the robot, the first scanner, and the second scanner, wherein the robot control module is configured to process the first and second scans according to the method of the first aspect. Accordingly, the first scanner may be a robot-mounted scanner located on the moving arm. The second scanner may be a fixed scanner which is stationary with respect to the moving arm.

The systems discussed herein may be configured to perform any of the method steps described above in relation to the first aspect.

Optionally, further steps may also be carried out to configure the robot, including: receiving a 3D virtual representation of at least a portion of a physical object, receiving target toolpath information indicating a region of interest of the 3D virtual representation, identifying a plurality of reference points in the region of interest, the reference points corresponding to locations on a surface of the physical object; for each reference point, calculating a vector extending from the surface of the physical object at the reference point, and determining a waypoint which is at a stand-off distance from the surface of the physical object along the vector; and connecting each of the waypoints to determine a toolpath for controlling a moving arm of the robot to operate on the physical object.

Automatically determining the toolpath using a 3D virtual representation in this way may provide a more precise toolpath than traditional methods of toolpath planning. In particular, the determined toolpath may maintain a constant distance from the surface physical object. As a result the robot operations such as repairs and welds may be performed more accurately and effectively. It will be appreciated that many other types of operations may be performed instead such as sanding, dressing, grinding, machining, peening, plasma spraying, etc. and the principles disclosed herein may equally be applied to such operations.

The target toolpath information indicating a region of interest may be received as configuration data, for example, from a user interface. Therefore, user can generate an accurate and precise toolpath for a specific object by simply indicating the region of interest without needing to use potentially proprietary and complex programming instructions to calculate and program a toolpath.

The toolpath may be understood to be a series of instructions for a robot that tell the robot how to move its end-effector or tool to perform a task, for example, using a moving arm of the robot. The toolpath may describe one or more selected from: a path, speed, direction, tool orientation, tool height, or tool position for each point (referred to as waypoints) along the path.

The 3D virtual representation of the physical object may be aligned with a coordinate system of the robot. Accordingly, each of the reference points and waypoints may be defined in the robot coordinate system. A position controller of the robot may direct the moving arm of the robot to any of the reference points or waypoints using the robot coordinate system and default operating instructions.

The 3D virtual representation of the physical object may be a digital model of the object aligned to the robot coordinate system (or with a known transformation to the coordinate system). For example, the digital model may be defined in a coordinated space of the ROS. The 3D virtual representation may be an overall representation generated from a combination of first and second scans of the physical object. For example, the 3D virtual representation may be the first, second, or overall 3D virtual representation mentioned above in relation to the first aspect.

For the avoidance of doubt, the computer-implemented aspect of the present aspect may include any of the steps described above in relation to the first aspect.

The computer-implemented method may further comprise: directing the moving arm of the robot to move according to the determined toolpath. For example, the robot may be a welding robot comprising a welding tool. The moving arm of the robot may be configured to move the welding tool along the determined toolpath to form a weld join on the physical object.

The vector may be a normal vector, extending orthogonally from the surface of the 3D virtual representation at the reference point. The method may may comprise using the normal vector for each reference point to determine a tool orientation for each waypoint. Each tool orientation may then be used to construct a tool orientation plan for the toolpath. The tool orientation plan may be used by a robot controller to direct the robot to orient a tool such as, but not limited to, a welding torch according to the tool orientation plan. The computer-implemented method may comprise using the tool orientation plan to control the moving arm to orient the tool as the moving arm follows the determined toolpath.

For example, the robot may be directed to orient a tool orthogonally to the surface of the robot. Therefore, the tool orientation for each waypoint may be determined to be parallel to or lie along the respective normal vector used to determine that waypoint.

The target toolpath information may comprise a target stand-off distance for determining the waypoints. The target stand-off distance may be configurable by a user. For example, the method may comprise receiving the target stand-off distance, for example, as a user input.

In some examples, the target stand-off distance may be determined according to a tool type (e.g., a type of welding tool) associated with the robot. For example, the target stand-off distance may be a weld height or arc-gap associated with a welding torch or electrode.

In some examples, the received target stand-off distance may be set to zero and so the reference points on the object surface may form the waypoints for connecting to form the toolpath. In such examples, the normal vectors may not be needed to determine the waypoints. However, the normal vectors may still be calculated for determining an orientation for the tool along the toolpath. In other examples, the stand-off distance may be non-zero, so that the waypoints are offset from the object surface and are distinct points which are separate to the initial reference points.

The target toolpath information may comprise a curve-fitting order. Determining the toolpath may then comprise fitting a curve of the curve-fitting order to the plurality of waypoints. The curve-fitting order may be configurable, for example, via a user input or determined from a target toolpath. For example, if the target toolpath looks like it should follow a "S-shape", then the method may comprise fitting a third-order polynomial to the waypoints to provide the toolpath. In some examples, the toolpath may be formed of a single curve. However, in other examples, the toolpath may be formed as a spline comprising multiple curves. In this way, a toolpath which can accurately follow the shape of an object surface can be developed and adapted for a specific object.

The method may comprise displaying the 3D representation (e.g., on a display or in a GUI) and receiving a user input indicating the region of interest on the 3D representation. For example, the target toolpath information may comprise a desired toolpath defined relative to the 3D virtual representation in the target area. The reference points may then be identified by: determining equidistant locations along the desired toolpath, and determining respective locations on the surface of the 3D virtual representation which are closest to each equidistant location on the desired toolpath. The desired toolpath may then be divided into a predetermined or configurable number of reference points.

When the desired toolpath is drawn onto a display of the 3D virtual representation by a user, the desired toolpath may not accurately follow the surface of the physical object. Accordingly, by determining the respective locations on the surface of the 3D virtual representation, a more precise toolpath which follows the surface of the physical object can be determined by effectively snap-fitting the desired toolpath to the model surface.

In other examples, the target toolpath information may comprise a target area of the 3D virtual representation. For example, a user may indicate a general area such as a rectangle or circle within which the toolpath should be defined. The target toolpath information may further comprise a start line in the target area, and an end line in the target area. For example, the start and end lines may be user inputs which, optionally, have been drawn onto a display of the 3D virtual representation. The start and end lines may indicate a start and end point of the desired toolpath and a direction of travel. The reference points may then be identified by determining equidistant points along a line connecting the start line and the end line. The line may be defined as the shortest possible line which connected the start line and the end line by passing through the target area.

The computer-implemented method may comprise displaying the 3D virtual representation of the physical object and one or more selected from: the reference points, the determined waypoints, or the determined toolpath, on the 3D virtual representation. Accordingly, users can easily see a visualisation of the toolpath which has been determined and more easily provide an approval, or updates for the determined toolpath.

The computer-implemented method may comprise receiving adjustments to the waypoints or to the toolpath being displayed, and updating the waypoints (and the determined toolpath) according to the adjustments. For example, the method may comprise receiving a drag and drop user input adjusting a position of a waypoint or a portion of the toolpath via a user interface.

As mentioned above, the toolpath may comprise a tool orientation plan for orientating a tool on the moving arm of the robot relative to the physical object. The method may then comprise determining if and where the tool may collide with the physical object. Determining if and where the tool may collide with the physical object may comprise overlaying a virtual representation of the tool on the 3D virtual representation of the physical object at one or more of the waypoints or positions along the determined toolpath, and detecting where the 3D virtual representation of the tool and 3D virtual representation of the physical object occupy common coordinates in the robot coordinate space. The overlay of the virtual representation of the tool and the physical object may be displayed e.g., on a screen or in a GUI.

The method may comprise displaying the 3D virtual representation of the physical object and indicating, in the display, one or more sections of the display where the tool is determined to collide with the physical object. For example, portions of the physical object which are predicted to collide with the tool (e.g., interaction points) may be highlighted or rendered in a different colour to the rest of the physical object being displayed. Adjustments may then be received to the tool orientation at one or more positions along the toolpath, e.g., via a user input. The determined toolpath for directing the robot may then be updated according to the adjustments.

The computer-implemented method may further comprise determining one or more additional toolpaths by replicating the determined tool path at an offset displacement along the surface of the physical object from the determined toolpath. The offset displacement may be a configurable distance from the (first) determined toolpath for defining an additional, second toolpath. Accordingly, user may quickly and easily plan multiple robot operations, such as multiple weld joins or passes for multi-pass welding, of the same toolpath shape and length without needing to laboriously determine an entirely new toolpath from scratch.

Each reference point (and optionally waypoint) may be moved by a same displacement along the surface of the object as the other reference points so that the replicated toolpaths have a same shape as the first toolpath. This is particularly useful for repairing objects with periodically repeating features such as engine components.

Replicating the toolpath may comprise duplicating each reference point on the surface of the 3D virtual representation, the offset distance away, to provide a duplicated set of reference points on the 3D virtual representation.

As mentioned above, the offset distance may be measured along a surface of 3D virtual representation of the physical object. Determining the location for each duplicated reference point may comprise using polynomial interpolation to determine the offset distance along the surface of the physical object. For example, the offset distance may be determined using third order polynomial interpolation. The present inventors have found that using third order polynomial interpolation, in particular, may provide suitable accuracy for following an object's surface whilst reducing processing time compared to if higher order interpolation where to be used.

The computer-implemented method may comprise storing the toolpath in a library as a predetermined toolpath. The library may be a database comprising a plurality of predetermined toolpaths, each predetermined toolpath being associated with a physical component or a reference surface for which that toolpath is configured to fit. For example, the predetermined toolpaths may be associated with standard test coupons for weld validation activities.

The computer-implemented method may comprise receiving a second 3D virtual representation of a second physical object or a second portion of the physical object. For example the second 3D virtual representation may be of a second physical object or a different feature area on the first physical object. The method may then comprise receiving a predetermined toolpath and aligning the predetermined toolpath with the second 3D virtual representation. In this way, a toolpath may be duplicated, conveniently and quickly, across different feature areas of a physical object which are similar to the first portion of the physical object (e.g., for an object with a periodically repeating surface shape), or across different physical objects which are similar to the first physical object.

For example, a user selection of a predetermined toolpath in the library may be received, or the toolpath which was determined in the preceding steps may be temporarily stored for re-use. The predetermined toolpath may be aligned with the second 3D virtual representation. The aligned toolpath can then be used by a robot controller to program the robot to operate on the second object or portion of the object. The predetermined toolpath may be overlayed on and displayed with the second 3D virtual representation for verification by a user.

Receiving the predetermined toolpath may comprise receiving a reference 3D virtual representation of a reference object associated with the predetermined toolpath. The reference 3D virtual representation may be a digital model of the physical object or a portion of the physical object which the predetermined toolpath was configured to fit to. The reference 3D virtual representation may be stored in the library with the predetermined toolpath. For example, the reference 3D virtual representation and the reference object may be the 3D virtual representation of the physical object discussed above for the original determination of the toolpath. For example, the library may comprise previous toolpaths generated for other previous tasks. Further, the library may comprise progenerated toolpaths determined for standard simple geometries.

The computer-implemented method may comprise comparing the reference 3D virtual representation to the second 3D virtual representation to determine a coordinate transformation between the reference virtual representation and the second 3D virtual representation. For example, the transformation may be determined using an Iterative Closest Point (ICP) registration algorithm as discussed above in relation to aligning virtual models. The coordinate transformation may then be used to align the predetermined toolpath with the second 3D virtual representation. Accordingly, the predetermined toolpath from the library may be used to direct the robot to move relative to, and optionally operate on, the second physical object or second portion of the physical object.

The reference object or surface stored in the library and the second physical object may be standard component parts or include a standard surface shape such as a test coupon for weld validation. Accordingly, by storing predetermined toolpaths in a library, toolpaths may be aligned to standard object shapes quickly, without needing to re-calculate a new toolpath each time. A physical object in need of repair from a robotic welder may be looked-up in the library, and a predetermined toolpath associated with that physical object can then be retrieved from the library for repairing the object. Additional scans of the physical object in need of repair may be received and aligned with the predetermined toolpath in order to adjust the predetermined toolpath if needed (for example, to account for wear or damage having modified a surface shape of the physical object).

The method may comprise determining if a tool orientation of the predetermined toolpath causes a tool collision with the second physical object in the second 3D virtual representation. For example, toolpath collisions may be detected and modified as discussed above in relation to the original toolpath determination.

In a further aspect there is provided a computer-readable medium comprising instructions which when executed by a computer cause the computer to execute the method of the preceding aspect.

In a further aspect there is provided a robot controller (or processing system or control module etc) for performing any of the methods discussed herein of the preceding aspect. That is, the robot controller may comprises: a data input module configured to receive a 3D virtual representation of at least a portion of a physical object and target toolpath information indicating a region of interest in the 3D virtual representation, a tool path planning module configured to identify a plurality of reference points in the region of interest, the reference points corresponding to locations on a surface of the physical object, for each reference point, calculate a vector extending from the surface of the 3D virtual representation at the reference point, and determine a waypoint which may be at a stand-off distance from the surface of the 3D virtual representation along the vector; and connect each of the waypoints to determine a toolpath for controlling a moving arm of the robot to operate on the physical object.

In a further aspect there is provided a robotic system comprising: a robot comprising a moving arm, and a robot control module communicatively connected to the robot and configured to determine a toolpath for the robot according to the methos discussed herein. For example, the moving arm of the robot may comprise a welding torch, wherein the robot control module is configured to control the moving arm to move the welding torch along the determined toolpath.

In a further aspect there is provided a method of configuring a robot comprising: receiving a 3D virtual representation of at least a portion of a physical object, retrieving a predetermined toolpath from a library comprising one or more predetermined toolpaths, and aligning the predetermined toolpath with the 3D virtual representation for controlling a moving arm of the robot to operate on the physical object. The library may be a database of toolpaths discussed above in relation to the preceding aspects.

Aligning the predetermined toolpath with the 3D virtual representation may comprise retrieving a reference surface from the library, the reference surface being associated with the toolpath, and determining a coordinate transformation between the reference surface and the 3D virtual representation of the physical object. The coordinate transformation may then be used to align the predetermined toolpath with the 3D virtual representation of the physical object (e.g., by using the coordinate transformation to translate the predetermined toolpath from a first position in virtual space to a second in which the predetermined toolpath is aligned with the 3D representation).

The reference surface may be at least a portion of a reference 3D representation of an object for which the predetermined toolpath was configured for. Determining the coordinate transformation between the reference surface and the 3D virtual representation may then comprise comparing the reference 3D representation and the 3D virtual representation of the physical object. For example, comparing the representations may involve using an Iterative Closest Point (ICP) registration algorithm or other suitable model fitting method as discussed herein.

Accordingly, by matching the reference surface to the 3D virtual representation of the physical object, a suitable location for placing the predetermined toolpath on the 3D virtual representation and for operating the robot can be determined.

Retrieving the predetermined toolpath from the library may comprise receiving a selection of the predetermined toolpath to retrieve. For example, a user may indicate that the physical object is a standard part which is associated with a predetermined toolpath in the library. The method may then comprise retrieving the predetermined toolpath associated with the indicated standard part in the library.

Receiving and fitting predetermined toolpaths from a library may enable quick and convenient automatic programming of the robot for operating on standard parts, whilst still ensuring accurate control of the robot relative to the parts. Additionally, the toolpath may be replicated on different portions of the physical object using the interpolation and duplication methods discussed above.

In a further aspect there is provided a robot control system comprising: a central library comprising one or more predetermined toolpaths for controlling a robot, and one or more robot control modules, each configured to retrieve a predetermined toolpath from the central library and control a robot to move according to the predetermined toolpath. Each robot control system may further comprise a robot comprising a moving arm. The central library may be a database located on a remote server, the remote server being connected to the one or more robot control modules via a network such as the internet or an internal intranet.

Additional aspects may relate to systems configured to execute the computer-implemented method of aspect described herein. Specifically, the system may comprise a processor which is configured to execute the respective computer-implemented methods of any aspect described herein.

Additional aspects may provide a computer program may comprise instructions which, when the program is executed by a computer, cause the computer to carry out the steps of a computer-implemented method of any aspect described herein. Further aspects may provide a computer-readable storage medium, having stored thereon, the computer program of the previous aspects of the invention.

The present disclosure includes the combination of the aspects and preferred features described except where such a combination is clearly impermissible or expressly avoided.

### BRIEF DESCRIPTION OF THE DRAWINGS

Embodiments will now be described by way of example only with reference to the accompanying drawings, in which:
**FIG. 1** shows a diagram of a robot operating system;
**FIG. 2A** shows an object;
**FIG. 2B** shows a 3D point cloud model of the object of FIG. 2A obtained using the 2D profile scanner;
**FIG. 3A** shows a physical object;
**FIG. 3B** shows a 3D virtual representation of the physical object of FIG. 3A;
**FIG. 4** shows a process for configuring a robot;
**FIG. 5** shows a flow diagram of a process for obtaining a coordinate transformation;
**FIG. 6** shows another process for configuring a robot;
**FIG. 7** shows a top-down view of a digital model;
**FIG. 8** shows a 2D contour drawing on the top-down view;
**FIG. 9A** shows estimated normal vectors for multiple points on the workpiece surface;
**FIG. 9B** shows estimated normal vectors for each reference point of a preliminary toolpath;
**FIGS.10A, 10B** and **10C** show how normal vectors are fitted using polynomial functions to mitigate surface irregularities;
**FIG. 11** shows a visual representation of a workpiece and a tool;
**FIG. 12A** shows a visual representation of a workpiece and a tool where interaction points between the tool and workpiece are highlighted;
**FIG. 12B** shows a visual representation of a workpiece and a tool wherein a waypoint of the toolpath has been adjusted;
**FIG. 13** shows an example of duplicated toolpaths on a 2D profile view of a workpiece;
**FIG. 14A** is a chart of duplicated reference points using linear interpolation;
**FIG. 14B** shows duplicated reference points on a workpiece surface;
**FIG. 15** shows a workpiece with multiple feature areas; and
**FIG. 16** shows a plurality of toolpaths.

### DETAILED DESCRIPTION

Aspects and embodiments of the present disclosure will now be discussed with reference to the accompanying figures. Further aspects and embodiments will be apparent to those skilled in the art. All documents mentioned in this text are incorporated herein by reference.

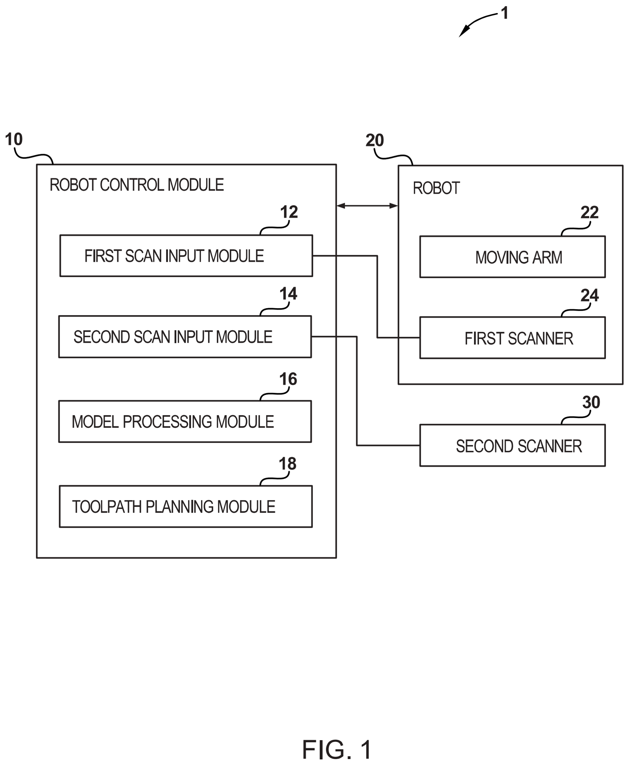

**FIG. 1** shows a diagram of a robot operating system 1. The system 1 comprises a robot 20 comprising a moving arm 22. The robot 20 is connected to a robot control module 10 which is configured to provide instructions to the robot 20 for positioning and moving the moving arm 22.

The robot control module 10 may form part of a controller of the robot 20 or be a separate computing system connected to the robot 20. The robot 20 may comprise a local controller for controlling the moving arm 22 based on instructions received from the robot control module 22, for example, to control stepper motors in the moving arm 22.

The moving arm 22 of the robot 20 preferably comprises a tool for operating on objects positioned in a work area of the robot 20. In the examples discussed herein, the tool is a welding torch and the robot 20 is for use in robotic welding to construct or repair workpieces in the work area. As discussed previously, it will be appreciated that in other examples the robot may be configured to perform other operations such as sanding, dressing, grinding, machining, peening, plasma spraying, etc.

Referring again to the embodiment, the robot 20 comprises a first scanner 24 mounted on the moving arm 22 of the robot 20. The first scanner 24 is configured to scan the work area in order to generate a digital model of any objects positioned in the work area. Preferably, the first scanner 24 is a 2D scanner configured to measure 2D profile (e.g., height data) between the moving arm 20 and a surface of an object positioned in the work area. Therefore, by moving the moving arm 20 along a predetermined path in the work area, a digital model comprising a 3D virtual representation of the object can be formed by combining the 2D profile data. Since the moving arm 24 is directed to move, by the robot control module 20, using a robot coordinate system to map the work area, a coordinate system of the resulting 3D virtual representation therefore corresponds to the robot coordinate system.

The first scanner, may for example, be a laser profile scanner configured to measure 2D profile data. The resulting 3D virtual representation is typically formed of point cloud data.

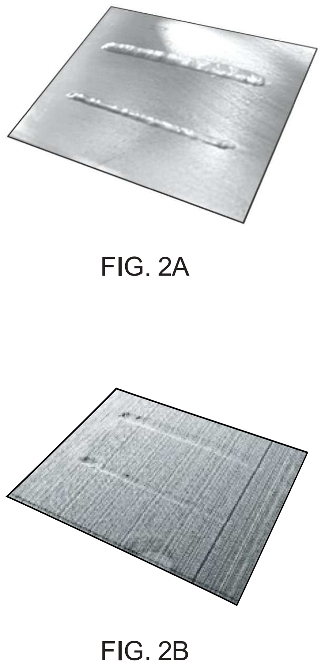

**FIG. 2A** shows an example object, and **FIG 2B** shows a 3D point cloud model of the object obtained using a 2D profile scanner. Such scanners, for example in this instance a Micro-Epsilon 2D scanner, provide detailed profile information but have only a small field of view. Therefore, it would take a very long time to construct a digital model of an entire object using such a scanner. Therefore, the system 1 comprises a second scanner 30 for acquiring more information about objects in the work area.

Returning to FIG. 1, the robotic operating system 1 further comprises the second scanner 30 which is located independently to the first scanner 24 and the moving arm 22 of the robot 20. The second scanner 30 is configured to generate a second 3D virtual representation of a physical object in the work area. The second 3D virtual representation is defined in a second coordinate system which is independent to the robot coordinate system (e.g., the first scan and the second scan are unaligned). Preferably, the second scanner 30 has a wider field of view than the first scanner 24 so that additional information about a physical object in the work area can be acquired. For example, the second scanner 30 may be an optical scanner comprising one of more cameras.

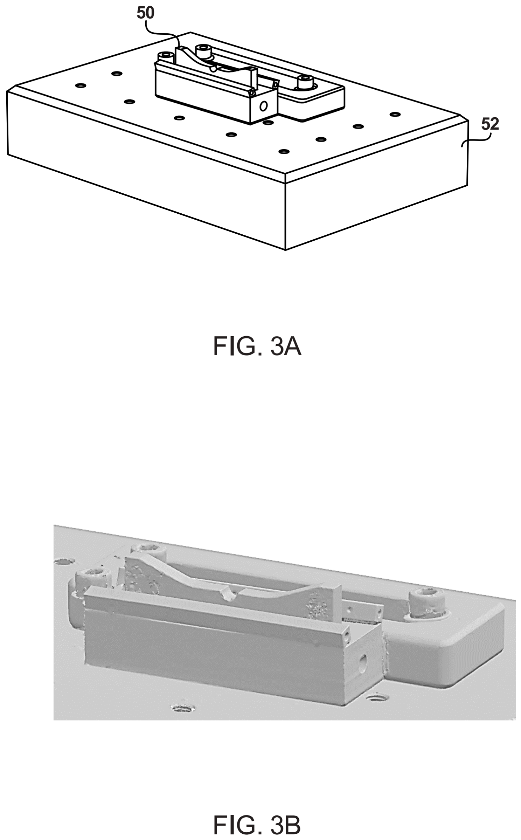

**FIG. 3A** shows an example physical object, which in this example is a component 50 mounted on a fixture 52, and **FIG. 3B** shows the resulting 3D virtual representation of the physical object received from a second scanner 30. The 3D virtual representation is formatted as a 3D mesh wherein the structural build of the object is represented as a 3D model consisting of polygons having vertices (corner points) and lines connecting vertices (edges). In this example, the second scanner 30 is a GOM scanner which is configured to project fringe patterns onto the surface of the physical object and use two cameras record the projected patterns to create the 3D virtual representation.

By combining the 3D virtual representations from the first scanner 24 and the second scanner 30, a more detailed model of the physical object can be obtained for controlling the robot 20.

The robot control module 10 comprises a first scan input module 12, a second scan input module 14, and a model processing module 16. The first scan input module 12 is configured to receive a first scan of a physical object from the first scanner 24, wherein the first scan includes a first 3D virtual representation of at least a portion of the physical object in a first coordinate system which corresponds to the coordinate system of the robot 20. The second scan input module 14 is configured to receive a second scan of the physical object from the second scanner 30, wherein the second scan includes a second 3D virtual representation of at least a portion of the physical object in a second coordinate system which is independent to the coordinate system of the robot.

The model processing module 16 is configured to compare the first and second 3D virtual representations to determine a coordinate transformation between the first and second coordinate systems, and then use the coordinate transformation to align the first and second 3D virtual representations. This also serves to align the second 3D virtual representation with the robot coordinate system.

Once the first and second 3D virtual representations are aligned, they may be combined to determine an overall 3D virtual representation of the physical object which is aligned with the robot coordinate system. The robot control module 10 can then direct the robot 20 to move to the moving arm 22 to different positions on or around the physical object by using the first and second 3D virtual representations to identify the locations of features on the object surface.

Finally, the robot control module 10 comprises a toolpath planning module 18 configured to determine a toolpath for the robot 20 to follow, e.g., during robotic welding of the physical object 50. The functions of the toolpath planning module 18 are described in more detail below.

Herein, the term "module" is used to refer to a functional module which is configured or adapted to execute a particular function. The modules may be implemented in hardware (i.e. they may be separate physical components within a computer), in software (i.e. they may represent separate sections of code, which when executed by a processor, cause the processor to perform a particular function), or in a combination of both.

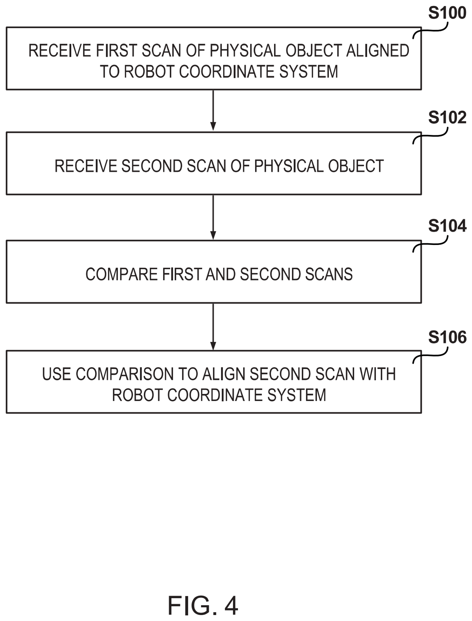

**FIG. 4** shows a process for configuring the robot 20 which may be performed by the robot control module 10. In particular, the process may provide a method for aligning first and second scans of a physical object for controlling the robot 20.

First, in step S100, the robot control module 10 receives a first scan of a physical object from the first scanner, which is preferably a robot-mounted scanner. The first scan comprises a first 3D representation of the physical object relative to first coordinate system which is aligned with (or has a known correspondence to) the coordinate system of the robot 20.

Next, in step S102, the robot control module 10 receives a second scan of the physical object from the second scanner 30. Preferably, the second scanner is located independently to the robot. For example, the second scanner may be the GOM scanner described above. The second scan therefore includes a second 3D virtual representation of at least a portion of the physical object in a second coordinate system. Steps S100 and S102 may be performed in parallel of in the opposite order to that shown.

Next, in step S104 the first and second 3D virtual representations are compared to determine a coordinate transformation between the first and second coordinate systems.

Finally, in step S106 the coordinate transformation is used to align the first and second 3D virtual representations. This causes the second 3D virtual representation to be aligned with the robot coordinate system. Accordingly, the robot control module 10 may direct the moving arm 22 to move to positions which are identified in the second 3D virtual representation by using the coordinate transformation to translate those identified positions to positions in the robot coordinate system.

In particular the aligned first and second 3D virtual representations may be combined and used to determine a toolpath for the robot on the physical object, for example, to form a weld join on the physical object.

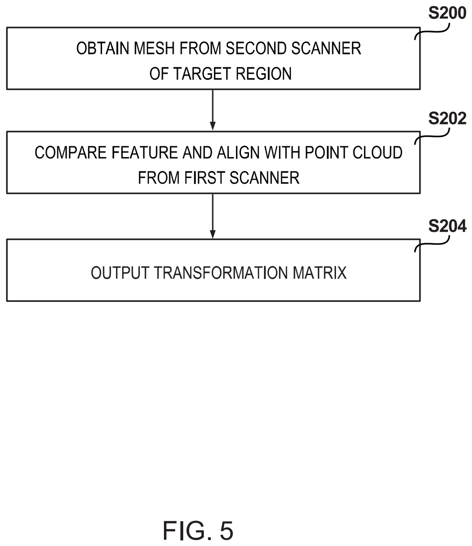

**FIG. 5** shows a flow diagram of a process for obtaining the coordinate transformation.

In this example, the second 3D representation is a mesh (e.g., comprising a mesh file) and the first 3D representation from the first scanner is a point cloud. Therefore, the mesh file is first converted to a point cloud at step S200. The resulting point cloud is then compared and aligned with the point cloud from the first scanner at step S202.

The aligning of the first and second 3D virtual representations at step S202 is performed using Iterative Closest Point (ICP) registration, such as the Iterative Closest Point (ICP) registration algorithm from Open3D which will be familiar to those skilled in the art as an open-source library comprising codes for dealing with 3D data. The ICP algorithm iteratively refines a transformation matrix that best aligns the GOM scan data (i.e., the second 3D virtual representation) with the point cloud generated by the 2D scanner (i.e., the first 3D virtual representation). Other registration algorithms, such as point-to-plane or multi-way registration may also be used to determine the coordinate transformation, particularly for workpieces with challenging geometries or when combining data from more than two scanning systems.

Once the alignment is achieved, the resulting coordinate transformation - in the form of a transformation matrix - is outputted at step S204 and is then used to estimate the conversion of the GOM scanned data (i.e., the second 3D virtual representation) or any planned toolpath, back into the robot's coordinate system, ensuring high fidelity and precision for robotic weld repair operations. In this example, the conversion and comparison is applied to a target region of the second 3D representation corresponding to a portion of the physical object.

In some examples, a single scan from the second scanner may not be sufficient to capture all the part information for the physical object in one mesh file. In these examples, multiple scans may be acquired which are taken at different angles and then combined into a single point cloud to generate the second 3D virtual representation of the physical object.

When one or more of the scans discussed herein is a point cloud, a user configured voxel size may be set to create a uniformly down-sampled point cloud. In this way, the resolution of the point cloud can be uniformly reduced in order to shorten the computation time as scan file sizes increase owing to the combination of combining multiple scans or for large workpieces. The resulting down-sampled point cloud is then used to combine the first and second 3D virtual representations into an overall 3D virtual representation. The overall 3D virtual representation is then used to determine a toolpath for programming the robot to operate on the physical object.

Combining digital models from two scanning methods in this way enables cross-checking of the accuracy of each scanning method. This can highlight if either of the scanning systems requires recalibration or if an alternative method, like a 3D laser scanner, is required for some features of the physical object.

While the example system described herein includes a Micro-Epsilon 2D scanner, alternative high-resolution scanners may be used as the first scanner. For example, a 3D depth camera or a 3D laser scanner may be used provided it can be integrated with the robot's coordinate system and mounted on the robot moving arm. Furthermore, although a UR robot is specified, other robots comprising moving arms may be used. Modifications might include adjustments to the mounting hardware or calibration procedures to ensure accurate data capture and transformation.

The robot control module may use the Robot Operating System (ROS) for data transformation; however, alternative software systems capable of performing complex coordinate transformations could be employed. Accordingly, the methods described herein may be adapted to use different algorithms or transformation matrices suitable for various robotic control architectures.

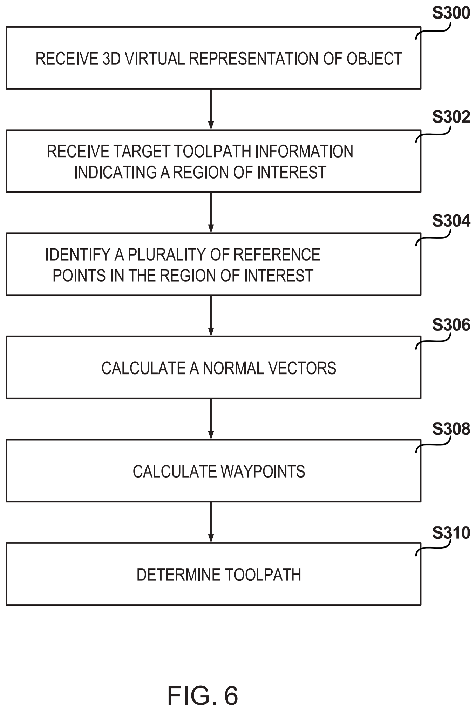

**FIG. 6** shows a process for determining a toolpath for programming a movement of the robot 20. The process may be performed by the toolpath planning module 18 of the robot control module 10 shown in FIG. 1. The toolpath represents a planned path for directing the robot and is formed of series of connected waypoints defined in the robot's coordinate system e.g. for positioning a welding torch in order to repair a workpiece.

The toolpath planning module 18 may be an application running on a computer for inputting, planning, and approving toolpaths for programming the robot.

First, at step S300 the toolpath planning module 18 receives a 3D virtual representation of at least a portion of a physical object. The 3D virtual representation may be received from a scanner configured to scan the physical object. For example, the 3D virtual representation may be formed from a combination of the first and second 3D virtual representations discussed above.

Next, at step S302, target toolpath information is received indicating a region of interest in the 3D virtual representation. The target toolpath information may be formed from user input data received via a user interface. For example, the region of interest may be input by a user as a series of coordinates or drawn onto a display of the 3D virtual representation of the physical object.

At step S304, a plurality of reference points are identified in the region of interest. The reference points are positioned on the 3D virtual representation in locations that correspond to locations on a surface of the physical object. The reference points therefore form a preliminary toolpath indicating a route on the object surface to be followed by the moving arm of the robot.

Next, at step S306, for each reference point on the object surface, a normal vector is calculated which extends orthogonally from the surface of the 3D virtual representation at the reference point.

At step S308, a waypoint is determined for each reference point. The coordinate location of each waypoint is calculated by moving a stand-off distance along the normal vector from the respective reference point on the surface of the 3D virtual representation of the physical object.

By locating the toolpath at the stand-off distance above the object surface, the robot tool can be positioned at a suitable location for operating on the object depending on the tool being used. For example, the stand-off distance may be an arc-gap length specified by the user for guiding a welding task. The waypoints are determined by moving a specified distance along the normal vector from each surface point, effectively positioning the welding torch at the optimal distance from the workpiece surface for the welding task.

Finally, in step S210 each of the waypoints are connected, for example, using linear interpolation to determine a toolpath for controlling the moving arm of the robot to operate on the physical object.

Each of the above steps and additional optional steps are discussed in more detail below.

Firstly, when the 3D virtual representation of the physical object is received, the representation may be formatted as a point cloud or a mesh file, for example, depending on what type of scanner or software the representation was received from. Upon receiving the 3D virtual representation in step S300, the toolpath planning module initiates a process that prepares both a point cloud file and a mesh file, regardless of the original format of the digital model. If the 3D virtual representation comprises a mesh file, the tool path planning module generates a point cloud file by sampling points on the mesh's surface, ensuring a comprehensive representation of the workpiece's geometry.

If the 3D virtual representation comprises a point cloud, then the toolpath planning module creates a triangle mesh file using surface reconstruction, providing a structured representation of the physical object's surface.

Providing both model formats ensures optimal utilization of both formats in the toolpath planning process. For example, the mesh file may be used to determine the normal vectors and stand-off distances, since this is quicker and less resource intensive then if the point cloud were used. However, the point-cloud may be used to extract coordinates e.g., of the calculated waypoints (e.g., xyz cartesian coordinates) for forming the toolpath.

The target toolpath information may be user defined parameters received from a user interface such as the graphical user interface (GUI). The parameters included in the target toolpath information may include a 2D contour drawing wherein users may define the area of interest (e.g., a repair area) by drawing a 2D contour on a top-down view (X-Y plane) of the digital model. Additionally or alternatively, the parameters may include a stand-off distance, which may be a desired stand-off height above the object surface for controlling the tool. Additionally or alternatively, the parameters may include curve fitting and waypoint specifications. For example, one or more of: a curve fitting order for connecting the waypoints, a desired number of waypoints, or a preferred height fitting approach may be selected (e.g., surface-based, constant, linear, or custom curve) may be received to tailor the resulting toolpath to the physical object's specific needs.

In some examples, users may manually draw points of the desired toolpath directly on a visual display of the 3D virtual representation, for example, on a 2D xy projection of the physical object.

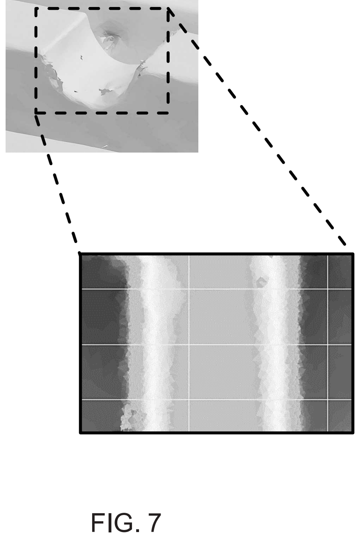

**FIG. 7** shows a top-down view of a 3D virtual representation of an indicated region of the physical object.

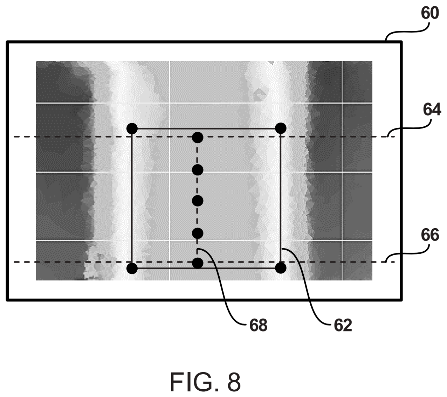

**FIG. 8** shows a graphical user interface (GUI) 60 wherein a 2D contour drawing 62 is superimposed on the top-down view of the 3D virtual representation of an object. The 2D contour drawing 62 may, for example, be specified by a user drawing onto the top-down view. The 2D contour drawing 62 indicates a region of interest on the physical object. Additionally, the 2D contour drawing 62 comprises a start line 64 and an end line 66 which define start and end positions for the tool moving along the toolpath. Also shown in FIG. 8 is a toolpath 68 (generated using the methods discussed herein) extending from the start line 64 to the end line 66 through the area of interest. The GUI 60 may also include input fields (not shown) for receiving the desired number of waypoints, curve fitting order, and height criteria.

Based on the 2D contour and height criteria, or on points or a target area drawn by a user, the toolpath planning module identifies reference points on the object surface that meet those criteria. To do this, points within an area of interest defined by the criteria that are on the mesh (e.g., that precisely adhere to the surface of or are just outside the mesh) are identified, for example, using Open3D's distance queries function. These reference points guide the creation of a preliminary, high-density toolpath extending along the object surface. Normal vectors are then determined for each reference point on the object surface.

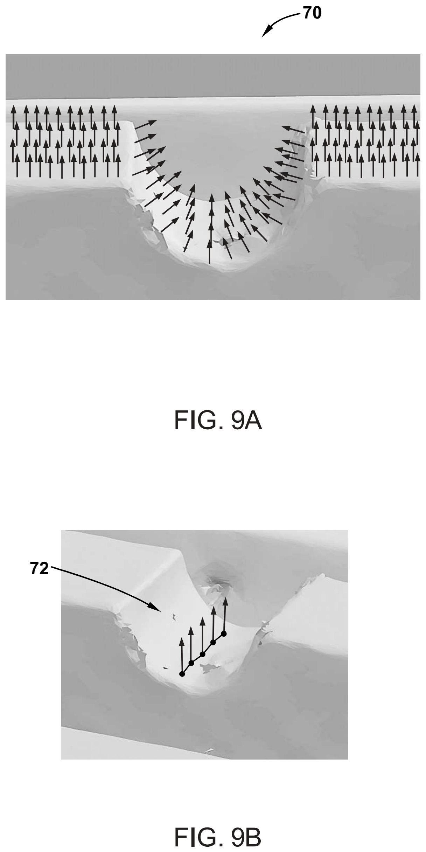

**FIG. 9A** shows estimated normal vectors 70 for multiple points on the workpiece surface and **FIG. 9B** shows estimated normal vectors 72 for each reference point of a preliminary toolpath. The robot control module calculates normal vectors 72 for each point on the preliminary toolpath, facilitating the accurate orientation of the welding tool relative to the workpiece surface. By basing waypoint generation on normal vectors, the system ensures that the tool stand-off distance (e.g., the arc gap distance between a weld electrode and the workpiece) is maintained uniformly, even on non-flat surfaces.

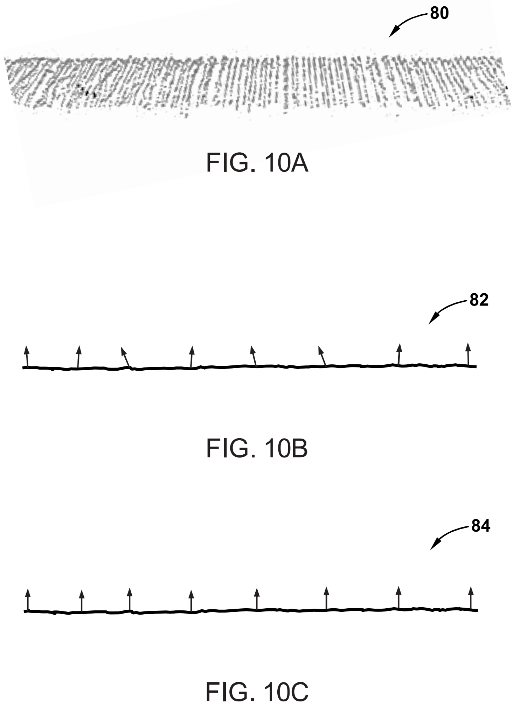

**FIG. 10A** illustrates a non-smooth surface 80 and **FIG. 10B** shows an initial set of normal vectors 82 on the non-smooth surface 80. **FIG. 10C** shows adjusted normal vectors 84 fitted using polynomial functions to mitigate surface irregularities. Polynomial functions are used to fit the normal vectors and the heights of the waypoints in order to mitigate surface irregularities by determining a general trend of the surface geometry at each reference point. This is particularly beneficial for worn or damaged areas of a workpiece.

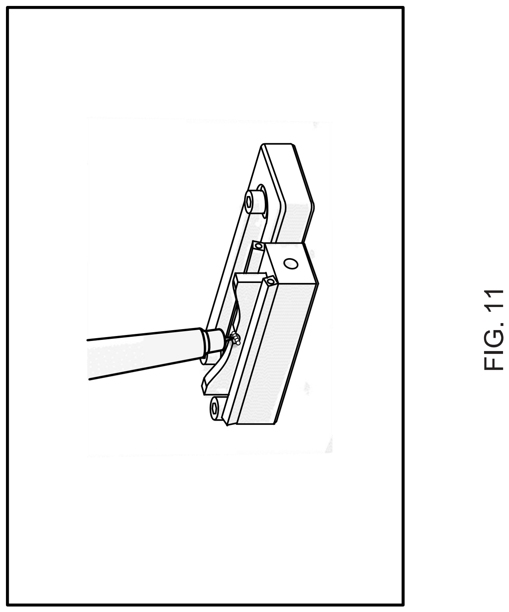

**FIG. 11** shows a visual representation of a physical object with a tool superimposed onto the object. Following the initial generation of waypoints, users may adjust and fine-tune the position and tool orientation of each waypoint to achieve optimal alignment with the workpiece and the desired toolpath. A 3D view of the 3D virtual representation, with the plotted waypoints and a visual representation of the tool (e.g., a welding torch or electrode) is displayed, as shown in FIG. 11, to aid in the precise adjustment of waypoints, ensuring the toolpath closely follows the physical object's geometry.

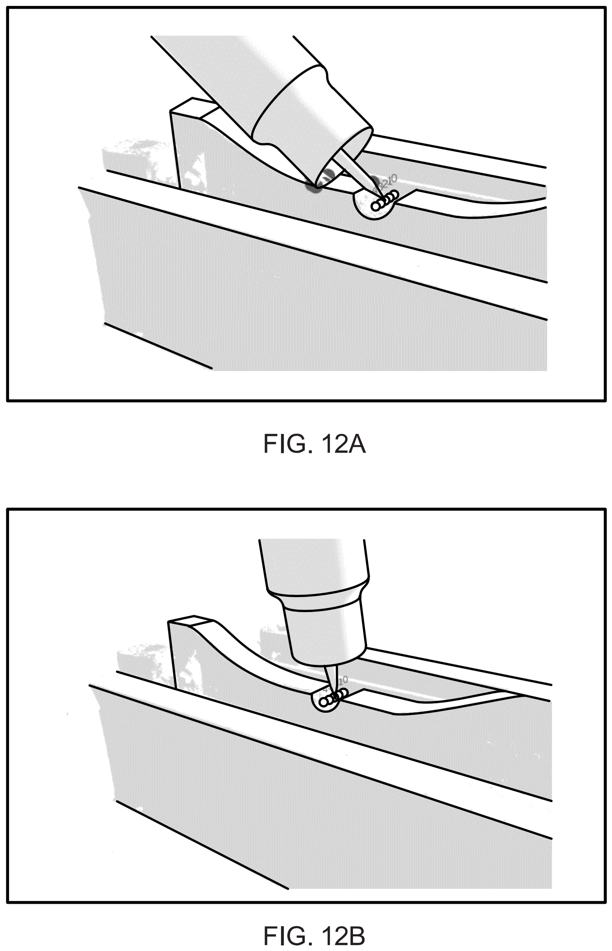

Additionally, interaction points where the tool is predicted to come into contact with the physical object are determined and displayed on the 3D view. **FIG. 12A** shows an example visual representation of a workpiece and a tool where the interaction points between the tool and workpiece are highlighted.

Users can adjust the waypoints' position or orientation in order to avoid potential collisions and ensure a smooth, uninterrupted tool operation (e.g., welding process). **FIG. 12B** shows a visual representation of a workpiece and a tool wherein a waypoint of the toolpath has been adjusted.

Once the toolpath is fine-tuned for one pass (e.g., for one weld bead) of a specific feature in the physical object, the toolpath planning module can optionally use an interpolation function to replicate the determined toolpath to other areas of the physical object. For example, replicated toolpaths can be interpolated between two reference toolpaths (reference toolpaths having been planned by the toolpath planning method discussed above).

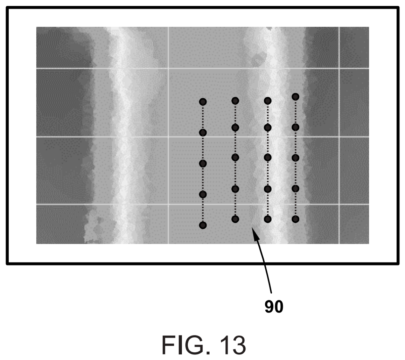

**FIG. 13** shows an example of duplicated toolpaths 90 on a 2D profile view of a workpiece. Additional toolpaths are generated by performing linear interpolation of an offset distance across the object surface so determine a spacing between toolpaths, for example, for multi-pass welding.

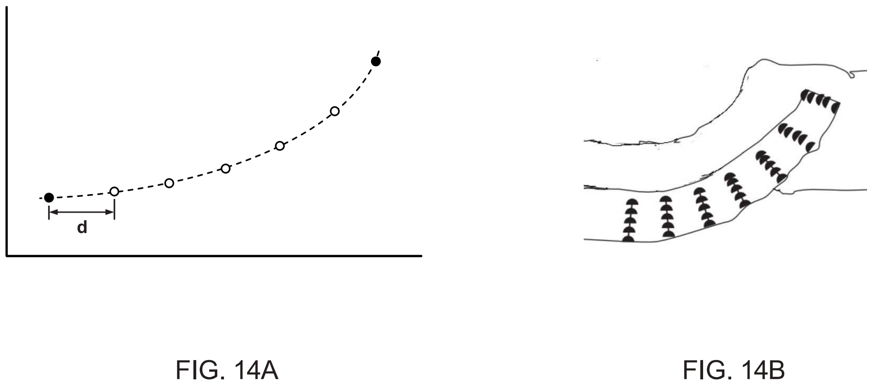

**FIG. 14A** is a chart of reference points which have been duplicated using linear interpolation of an object surface. As shown, this method can yield evenly spaced toolpaths across changes in tool positions across curved surfaces, as shown in **FIG. 14B****.** Reference points and linear interpolating data are firstly used to derive a third-order polynomial function to represent the surface profile. Next, evenly spaced points on the object surface, spaced apart by distance d, are found using the polynomial function. Accordingly, if a work area of a physical object requires multiple repeated passes of an identical tool path in different positions (e.g., multiple weld passes), then the interpolation function provides a quick, simple, and accurate method to plan repetitive toolpaths for such purposes.

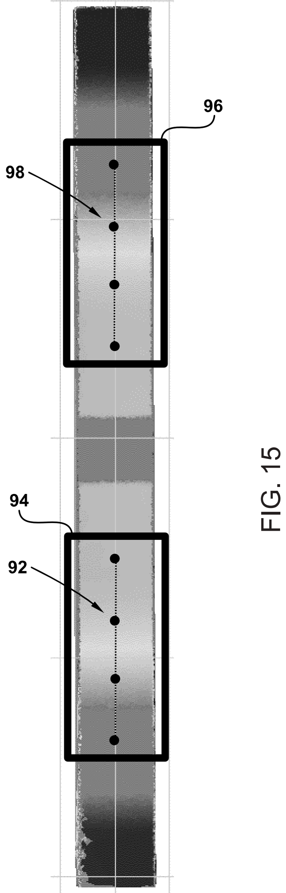

**FIG. 15** shows a toolpath duplicated across different workpiece feature areas. The toolpath planning module is therefore configured to replicate a determined toolpath 92 for a first portion 94 of a physical object on another, similar, portion 96 of that physical object to produce a duplicated toolpath 98. In this way, a user does not need to repeat all of the steps described above to generate toolpaths for each repeated feature on an object.

First, a user can select a feature area to copy the original defined toolpath/paths from and then select a new feature area to duplicate the paths to as shown in FIG. 15. This function utilizes the point cloud alignment methods discussed above (e.g., ICP registration) in relation to the combining of 3D models to align the toolpath of a first portion with a second portion of the object.

In robotic welding, before generating a toolpath for a welding repair of an actual part, weld validation of a particular material or geometry may be performed. Weld validation is typically carried on standardized test coupons with a set size/geometry for laboratory testing and analysis.

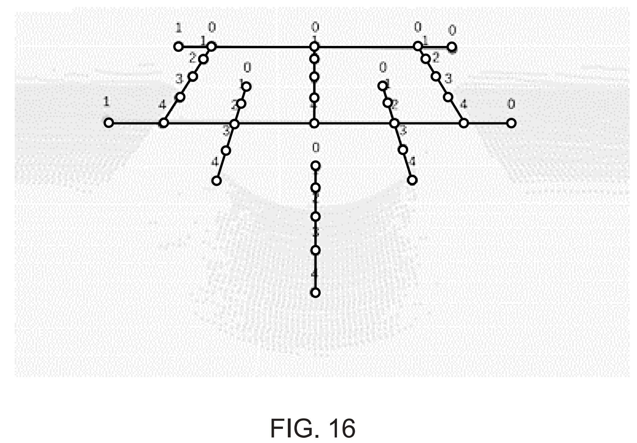

The toolpath planning module is therefore additionally configured to automatically generate toolpaths for multi-pass welding of known or standard components such as test coupons. First, a first path (bead 1) is determined using the method described above. The toolpath planning module will then identify a known reference zone in a digital model of the known component and then detect two edge lines on the reference zone. Based on the two edge lines, the toolpath planning module will apply different offsets to the waypoints of the first toolpath (bead 1) in order to generate the waypoints of one or more additional toolpaths (bead 2 to bead 8) as shown in **FIG. 16****.**

In some examples, the toolpath planning module may be connected to or comprise a weld method selection library comprising a plurality of pre-generated toolpaths and start and stop techniques for toolpaths. Start and stop techniques refer to techniques used at the beginning, and/or end of a weld bead to ensure a successful weld, for example where the weld tool is used in at a specific angle, height, or speed for part of the weld. Such techniques may be included in the library for automatically adding to a selected toolpath. Operators may then easily select between start and stop techniques to automatically generate a toolpath for the robot to follow by adding it to the start/end of an existing toolpath. This will enable operators to quickly trial which method produces the best results for a certain weld and tune toolpaths with a greater control than if they were carried out manually. Other manual fabrication techniques to welding also have stop and/or start methods which can be included in a toolpath library in this way. For example, in sanding a start technique may include a period of slower sanding which is less than full speed, and in dressing, an tool force may be specified at the beginning of a toolpath.

This systematic approach to toolpath planning ensures the generation of consistent waypoints and accurate tool orientation, improving upon the variability inherent in manual robot teaching methods. Unlike the complex setup required for offline programming, which necessitates skilled robotic engineers, the methods discussed herein offer an intuitive, user-friendly graphical interface and robot programming function. The methodology simplifies toolpath generation, making sophisticated weld repair accessible to operators of varying skill levels. Further, the multi-pass functions for duplicating toolpaths (e.g., for multi-pass welding) enable the automation of welding development for standard components such as test coupons and improves repeatability across challenging geometries and weld materials.

## Claims

1. A computer-implemented method of configuring a robot (20), the method comprising:
receiving a first scan of a physical object (50) from a first scanner (24), wherein the first scan includes a first 3D virtual representation of at least a portion of the physical object (50) in a first coordinate system corresponding to a coordinate system of the robot (20);
receiving a second scan of the physical object (50) from a second scanner (30), wherein the second scan includes a second 3D virtual representation of at least the portion of the physical object (50) in a second coordinate system;
comparing the first and second 3D virtual representations to determine a coordinate transformation between the first and second coordinate systems; and
using the transformation to align the first and second 3D virtual representations; wherein the first scanner (24) is a robot-mounted scanner located on a moving arm (22) of the robot (20), and the second scanner (30) is a fixed scanner located independently to the moving arm (22) of the robot (20).

2. The computer-implemented method of claim 1 further comprising using the second scan and the coordinate transformation to position the moving arm (22) of the robot (20) relative to the physical object (50).

3. The computer-implemented method of claim 1 or 2 wherein the first scanner (24) is a 2D scanner configured to measure a plurality of distances between the first scanner (24) and the physical object (50) to provide 2D profile data for forming the first 3D virtual representation, wherein receiving the first scan comprises:
sending position signals to the robot (20) to move the moving arm (22) on a predefined path,
receiving the 2D profile data from the 2D scanner, and
using the position of the moving arm (22) in the robot coordinate system to combine the 2D profile data to construct the first 3D virtual representation.

4. The computer-implemented method of any preceding claim wherein the second scanner (30) is an optical scanner comprising one or more cameras.

5. The computer-implemented method of any preceding claim wherein the first 3D virtual representation comprises point cloud data and the second 3D virtual representation comprises mesh data,
wherein the method further comprises converting the point cloud data to mesh data or converting the mesh data to point cloud data.

6. The computer-implemented method of any preceding claim wherein comparing the first and second 3D virtual representations to determine the coordinate transformation comprises using a geometric registration algorithm; wherein optionally, the geometric registration algorithm comprises Iterative Closest Point (ICP) registration.

7. The computer-implemented method of any preceding claim further comprising using the coordinate transformation to combine the first and second 3D virtual representations to provide an overall representation of the physical object (50) in the robot coordinate system.

8. The computer-implemented method of claim 7 further comprising:
displaying the overall representation of the physical object (50) on a display,
receiving a user input indicating a target area on the overall representation, and
using the target area and the robot coordinate system to determine movement commands for controlling a moving arm of the robot.

9. The computer-implemented method of any preceding claim wherein the robot (20) is a robotic welder comprising a welding tool, and the method comprises using the first and second scans and the coordinate transformation to calculate a toolpath for the welding tool of the robot (20) to operate on the physical object (50).

10. The computer-implemented method of any preceding claim wherein the method further comprises performing an initial calibration process to determine the correspondence between the first coordinate system and the robot coordinate system, wherein the initial calibration process comprises:
receive a first scan of a reference object from the first scanner (24),
receiving a reference scan from the second scanner (30) of the reference object, wherein the reference object is located in a known location in the robot coordinate system,
comparing a location of the reference object in the first scan and the reference scan, and
use the comparison to align the first coordinate system with the robot coordinate system.

11. A robot control module (10) for configuring a robot (20) comprising:
a first scan input module (12) configured to receive a first scan of a physical object (50) from a first scanner (24), wherein the first scan includes a first 3D virtual representation of at least a portion of the physical object (50) in a first coordinate system corresponding to a coordinate system of the robot (20),
a second scan input module (14) configured to receive a second scan of the physical object (50) from a second scanner (30), wherein the second scan includes a second 3D virtual representation of at least a portion of the physical object (50) in a second coordinate system,
a model processing module (16) configured to compare the first and second 3D virtual representations to determine a coordinate transformation between the first and second coordinate systems, and use the coordinate transformation to align the first and second 3D virtual representations.

12. The robot control module (10) of claim 11 wherein the first scanner (24) is a 2D robot-mounted scanner located on a moving arm (22) of the robot (20) and configured to measure a plurality of distances between the first scanner (24) and the physical object (50) to provide 2D profile data for forming the first 3D virtual representation, wherein the first scan input module (12) is configured to:
send position signals to the robot (20) to move the moving arm (22) on a predefined path,
receive the 2D profile data from the 2D scanner, and
use the position of the moving arm (22) in the robot coordinate system to combine the 2D profile data to construct the first 3D virtual representation.

13. The robot control module (10) of claim 11 or claim 12 wherein the model processing module (16) is configured to determine the coordinate transformation using a geometric registration algorithm.

14. The robot control module (10) according to any of claims 11 to 13 wherein the model processing module (16) is configured to use the coordinate transformation to combine the first and second 3D virtual representations to provide an overall representation of the physical object (50) in the robot coordinate system, wherein the robot control module (10) is communicatively connected to a display and the model processing module is configured to:
provide the overall representation of the physical object (50) to the display,
receive a user input indicating a target area on the overall representation, and
use the target area and the robot coordinate system to determine movement commands for controlling a moving arm of the robot.

15. A robotic operating system (1) comprising:
a robot (20) comprising a moving arm (22),
a first scanner (24) configured take a first scan of a physical object (50),
a second scanner (30) configured take a second scan of the physical object, and
a robot control module (10) according to any one of claims 11 to 14 communicatively coupled to the robot (20).
